Europäisches Patentamt

**European Patent Office**

**Office européen des brevets**

(19)

(11) Numéro de publication: **0 068 060**
A1

# (12) DEMANDE DE BREVET EUROPEEN

(21) Numéro de dépôt: **81450008.8**

(22) Date de dépôt: **25.06.81**

(51) Int. Cl.³: **B 01 J 3/03,** F 16 J 13/22,
E 05 D 15/10

(43) Date de publication de la demande: **05.01.83**
**Bulletin 83/1**

(84) Etats contractants désignés: **AT BE CH DE FR GB IT LI
LU NL SE**

(71) Demandeur: **S.A.R.L. COMMODORE INTERNATIONAL,
Complexe Artisano Industriel Secteur U,
F-33290 Blanquefort (FR)**

(72) Inventeur: **Baguet, Paul, 10 avenue des Mésanges,
F-33320 - Le Taillan (FR)**

(74) Mandataire: **Thebauit, Jean-Louls, 3, rue du Professeur
Demons, F-33000 Bordeaux (FR)**

(54) **Dispositif de commande d'ouverture et de fermeture de portes étanches, notamment d'autoclaves.**

(57) La porte se déplace en translation par rapport au plan
de l'orifice de passage, ledit dispositif étant caractérisé en
ce que la porte (6) est pourvue latéralement, sur deux côtés
opposés parallèles, d'organes de guidage (9) susceptibles
de se déplacer librement chacun simultanément dans un
premier chemin de guidage (10), et dans un second chemin
de guidage (17), lesdits premier et second chemins de guidage (10, 17) ayant un tracé déterminé de manière à contraindre les organes de guidage (9) à contacter ou quitter
le bord dudit orifice suivant une trajectoire orthogonale au
plan de l'orifice et, lorsque le voile (5) est à distance dudit
bord, à se déplacer en translation parallèlement à ce bord.

- 1 -

# DISPOSITIF DE COMMANDE D'OUVERTURE ET DE FERMETURE DE PORTES ETANCHES, NOTAMMENT D'AUTOCLAVES

La présente invention concerne d'une manière générale les dispositifs de commande d'ouverture et de fermeture de portes étanches soumises de part et d'autre à des pressions différentes.

L'invention sera décrite plus particulièrement dans son application à la commande de portes d'autoclave, mais il est bien entendu que le dispositif objet de l'invention peut s'appliquer à toute enceinte susceptible d'être soumise à une pression interne ou à une pression externe importante ou non, et munie d'une ouverture d'accès fermée par une porte mobile apte à supporter de manière parfaitement étanche les pressions internes lorsque l'enceinte est en service et, encore plus généralement, à toute porte, sas ou analogue séparant deux zones soumises à des pressions différentes et pour lesquels une excellente étanchéité doit être réalisée.

Dans le domaine des autoclaves, on connaît plusieurs systèmes de fermeture de porte.

L'un d'eux est constitué d'un ensemble de leviers disposés sensiblement radialement sur la face externe de la porte (en général circulaire). Les extrémités périphériques des leviers sont susceptibles d'être déplacées à la fois radialement à la porte et perpendiculairement au plan de celle-ci, afin de prendre appui contre une collerette solidaire du bâti de l'autoclave, entourant l'orifice d'entrée et chargée de verrouiller en position étanche la porte de l'autoclave.

Les autres extrémités des leviers sont commandés simultanément par une pièce annulaire mobile, à l'aide d'un volant, à la fois en rotation et en translation perpendiculaire au plan de la porte.

Ce système est compliqué et coûteux à réaliser car les leviers et leur dispositif de commande doivent être usinés avec précision à cause des mouvements dans les trois dimensions des leviers, si l'on veut une fermeture parfaitement étanche et tenant à de fortes pressions, ce qui implique que les extrémités d'appui de tous les leviers se déplacent rigoureusement en synchronisme et prennent appui en même temps sur la collerette de verrouillage.

En outre, ce système peut se révéler dangereux en cas d'ouverture intempestive de la porte car dès que les doigts échappent à la collerette de verrouillage, rien ne retient plus la porte qui peut alors s'ouvrir brutalement sous l'éventuelle pression interne et provoquer des accidents.

Un second système connu utilise la translation latérale de la porte. Celle-ci, en position de fermeture, est retenue prisonnière dans des glissières solidaires du bâti de l'autoclave et appliquée contre ces glissières à l'aide d'un joint gonflable logé dans une rainure ménagée autour de l'orifice d'entrée. Ce système est encore plus complexe que le précédent car il faut prévoir l'alimentation en fluide sous pression dans la rainure dans laquelle est logée le joint gonflable et prévoir toute une installation de commande et de contrôle du fonctionnement de ce joint lors des opérations d'ouverture et de fermeture de la porte.

Un tel dispositif est donc coûteux. Il est aussi plus fragile et moins fiable que le dispositif précédent. De plus, le joint utilisé est un joint spécial, coûteux et qu'il faut remplacer régulièrement car il s'use et risque de se déformer voire de s'endommager par suite des mouvements d'expansion et de retrait auxquels il est soumis dans son logement afin de venir se plaquer contre la porte (pour la fermeture) et de s'escamoter dans la rainure (pour l'ouverture).

Le but de l'invention est de proposer un dispositif de commande d'ouverture et de fermeture de portes notamment d'autoclave, de conception plus simple que celle des

0068060

dispositifs connus, moins coûteux de construction et de maintenance, plus sûre et en particulier susceptible, en cas d'ouverture intempestive de la porte, alors que l'intérieur est encore en surpression par rapport à l'extérieur, d'éviter tout risque d'accident.

A cet effet, l'invention a pour objet un dispositif de commande d'ouverture et de fermeture d'une porte susceptible d'être soumise de part et d'autre à des efforts pouvant être importants, du type dans lequel la porte se déplace en translation par rapport au plan de l'orifice de passage, ledit dispositif étant caractérisé en ce que la porte est pourvue latéralement, sur deux côtés opposés parallèles, d'organes de guidage susceptibles de se déplacer librement chacun simultanément dans un premier chemin de guidage constitué par une lumière de guidage ménagée dans deux glissières planes parallèles et orthogonales au plan dudit orifice de passage lesdites glissières se déplaçant en translation dans leur plan parallèlement au plan dudit orifice, à l'aide de moyens de commande appropriés, et dans un second chemin de guidage ménagé dans deux parois solidaires du bâti sur lequel est montée la porte tournées vers lesdites glissières et parallèles à celles-ci, lesdits premier et second chemins de guidage ayant un tracé déterminé de manière à contraindre, lors du déplacement des glissières, les organes de guidage, c'est-à-dire le voile de porte, à contacter ou quitter le bord dudit orifice suivant une trajectoire orthogonale au plan de l'orifice et, lorsque le voile est à distance dudit bord, à se déplacer en translation parallèlement à ce bord.

Suivant un mode de réalisation, ledit premier chemin de guidage comporte une première partie rectiligne orthogonale au plan de l'orifice de passage et une seconde partie rectiligne légèrement inclinée par rapport à l'axe longitudinal de la glissière et destinée à assurer la compression par le voile de porte d'un joint d'étanchéité interposé entre le voile et le bord de l'orifice, cependant que le second chemin de guidage comporte une première partie rectiligne parallèle au plan de l'orifice, commune aux seconds chemins de guidage d'un même côté et alignée avec l'extrémité de la première partie des premiers chemins de guidage, une seconde

- 4 -                                    0068060

partie rectiligne orthogonale au plan dudit orifice et dont l'extrémité est alignée avec l'extrémité de ladite seconde partie des premiers chemins de guidage et une partie rectiligne intermédiaire inclinée facilitant la transition entre les deux types de mouvement de translation de la porte.

Avantageusement les glissières coulissent dans des pièces solidaires dudit bâti et sont reliées par plusieurs traverses susceptibles de venir en contact avec des pièces d'appui solidaires de la porte, une fois le voile de porte en contact avec le bord de l'orifice de passage, les premiers chemins de guidage comportant, à cet effet, une partie rectiligne parallèle au plan dudit orifice et prolongeant la seconde partie de ces premiers chemins de guidage.

De préférence, la face de ladite partie rectiligne prolongeant les premiers chemins de guidage, recevant la poussée de réaction de la porte, présente à son extrémité un léger creux de façon que ladite poussée soit reportée sur le bâti par l'intermédiaire desdites pièces d'appui et traverses.

Le coulissement des glissières dans leurs guides est assuré par exemple par des crémaillères solidaires des glissières et en prise avec des pignons entraînés par un système manuel ou motorisé disposé latéralement à la porte.

Par ailleurs, ledit joint d'étanchéité est de préférence constitué par un joint de type connu enfilé à cheval sur la tranche de la paroi de l'enceinte définissant l'orifice d'accès, en sorte que le voile de porte est nu, un tel joint ayant l'avantage d'être peu coûteux et facile à changer tout en assurant une excellente étanchéité avec une durée de vie remarquable du fait de la manière suivant laquelle le voile de porte entre en contact avec le joint et s'en éloigne.

Quant à la sécurité d'un tel système, elle est parfaite puisque constamment, quelle que soit la position de la porte, depuis la fermeture jusqu'à l'ouverture totale, les pressions exercées sur la porte sont intégralement reportées sur le bâti de manière équilibrée.

- 5 -      0068060

D'autres caractéristiques et avantages ressortiront de la description qui va suivre d'un mode de réalisation du dispositif selon l'invention, description donnée à titre d'exemple uniquement et en regard des dessins annexés sur lesquels :

- Fig. 1 représente une vue en coupe partielle verticale de la partie supérieure d'un dispositif de commande de porte d'autoclave conforme à l'invention;

- Fig. 2 représente une vue en coupe partielle verticale de la partie inférieure du dispositif de la Fig. 1;

- Fig. 3 représente une vue en coupe partielle horizontale suivant la ligne III-III du dispositif de la Fig. 1, et

- Fig. 4 illustre une position intermédiaire de la porte du dispositif de la Fig. 1.

On a représenté en 1 sur les dessins la paroi interne d'un autoclave et plus précisément l'extrémité de cette paroi dont le bord 2 délimite l'orifice d'accès à l'autoclave, le plan P de cet orifice étant orthogonal à la paroi 1.

Le contour de l'orifice d'accès est rectangulaire, carré ou circulaire.

La paroi 1 est supportée par un bâti partiellement représenté en 3. Sur la tranche de l'extrémité 2 de la paroi d'autoclave est enfilé à cheval un joint d'étanchétité 4 formant ainsi un cordon continu présentant une face plane 4a parallèle au plan P de l'orifice d'accès et tournée vers le voile 5 de la porte 6 de l'autoclave.

Le voile 5 est pourvu, du côté opposé au joint, de deux longerons parallèles 7 disposés, dans le mode de réalisation représenté verticalement le long des deux bords opposés de la porte.

Chaque longeron 7 comporte des parties de plus grande épaisseur définissant des blocs ou cales d'appui 8 répartis le long des pièces 7.

Les blocs d'appui 8 extrêmes sont pourvus latéralement d'organes de guidage tournés vers l'extérieur et constitués par exemple par des galets 9 montés fous sur roulement ou à aiguilles.

Chaque galet 9 est susceptible de se déplacer dans un premier chemin de guidage constitué par une lumière 10 ménagée dans une plaque plane 11 formant glissière. Deux glissières parallèles verticales 11 sont ainsi prévues de part et d'autre de la porte 6.

Les glissières 11 coulissent dans des logements en forme d'auge ménagés dans des pièces 12 solidaires du bâti 3 de l'autoclave et emprisonnant ainsi les glissières 11 et la porte 6.

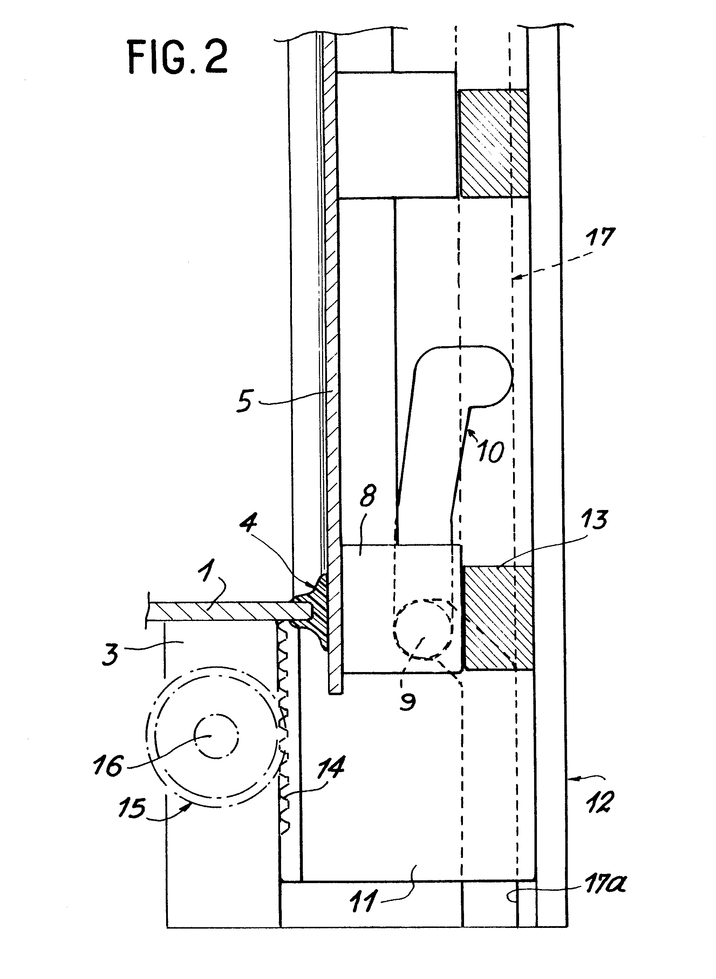

Les glissières 11 sont reliées entre elles par des traverses parallèles horizontales 13. Sur leur bord tourné vers l'autoclave, les glissières 11 portent une crémaillère 14 en prise avec un pignon 15 monté tourillonnant sur le bâti 3 à la partie inférieure du dispositif (Fig. 2). On a symbolisé en 16 l'arbre de commande simultanée des deux pignons 15 disposés de part et d'autre de la porte, cet arbre 16 étant entraîné soit manuellement par un volant ou une manivelle, soit mécaniquement par un motoréducteur approprié.

Les galets 9 s'étendent au delà des lumières 10 des glissières 11 et sont susceptibles de se déplacer dans un second chemin de guidage 17 ménagé dans la face interne des pièces 12.

Les chemins de guidage 10 et 17 ont des tracés particuliers réalisés de manière à contraindre les galets 9, c'est-à-dire le voile de porte 5 à se déplacer en translation suivant une trajectoire constituée de trois mouvements et qui sera explicitée plus loin.

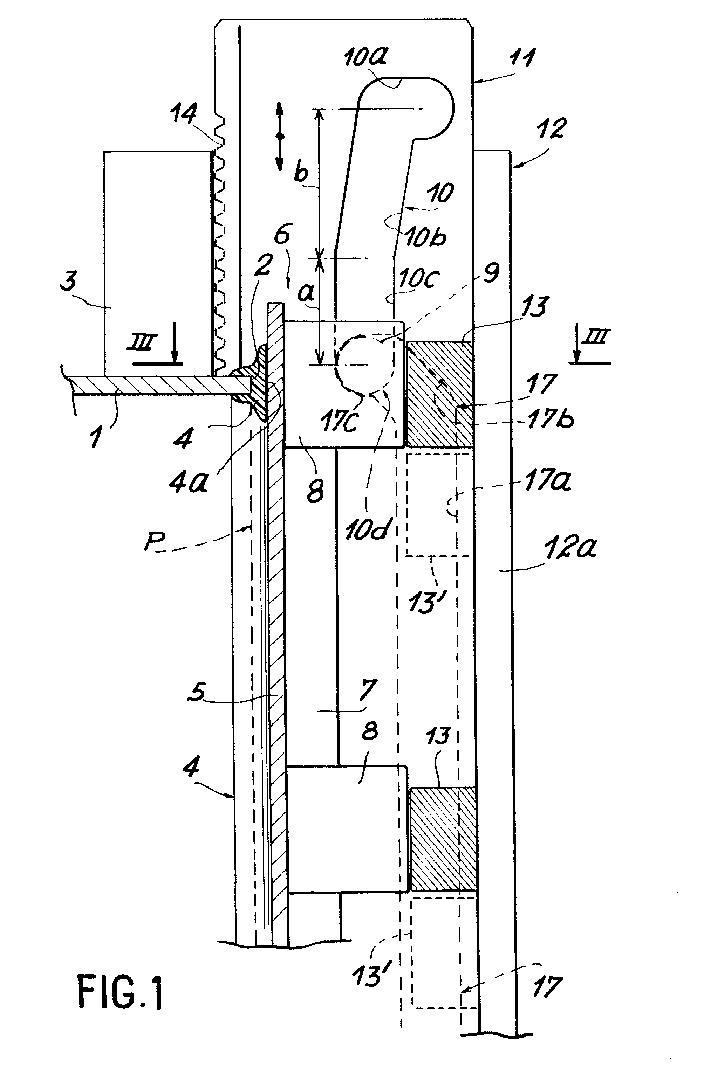

A cet effet, le premier chemin de guidage 10 comprend une partie 10a rectiligne perpendiculaire au sens de déplacement de la glissière 11. Cette partie 10a se prolonge par une partie 10b rectiligne légèrement inclinée sur la verticale en direction du voile de porte. La partie 10b est elle-même prolongée vers le bas par une troisième partie rectiligne 10c parallèle à la direction de déplacement de la glissière 11. Les deux chemins de guidage 17 d'une même pièce 12 comprennent une partie commune 17a courant verticalement sur presque toute la hauteur de la pièce 12 et plus précisément depuis l'extrémité inférieure (Fig. 2) jusqu'à la hauteur du rebord supérieur de l'orifice d'accès (Fig. 1). Cette

partie 17a est prolongée à son extrémité supérieure par une partie rectiligne 17b inclinée d'environ 45° vers l'autoclave, elle-même prolongée d'une partie rectiligne 17c horizontale en direction de l'autoclave.

Le fonctionnement du dispositif représenté et décrit ci-dessus est le suivant.

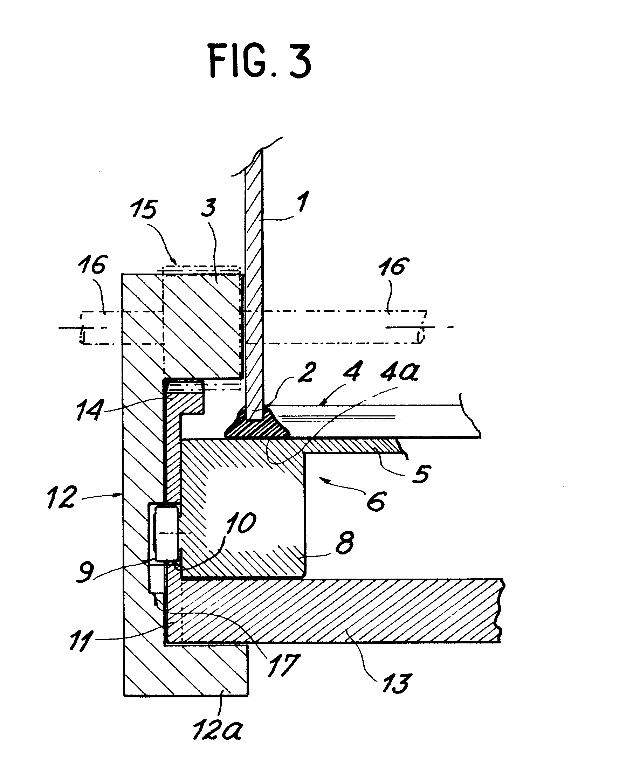

On va partir de la position de fermeture de la porte 6 représentée sur les Fig. 1 et 2. Dans cette position, le voile 5 est parallèle au plan P de l'orifice d'accès à l'autoclave et comprime le joint 4 sous une certaine pression. Les traverses 13 des glissières mobiles 11 se trouvent au droit des blocs 8. Ces derniers se trouvent en appui contre les traverses 13 qui reportent ainsi les poussées exercées sur le voile 5 sur le bâti 3 de l'autoclave par l'intermédiaire des retours 12a des pièces 12 (Fig. 3). Ce report des efforts sur le bâti effectué en plusieurs points répartis à la périphérie de la porte 6 procure à ce dispositif une excellente tenue aux pressions à l'intérieur de l'autoclave.

Pour ouvrir la porte, les pignons 15 sont entraînés en rotation (manuellement ou mécaniquement) de façon à faire descendre simultanément les deux glissières 11.

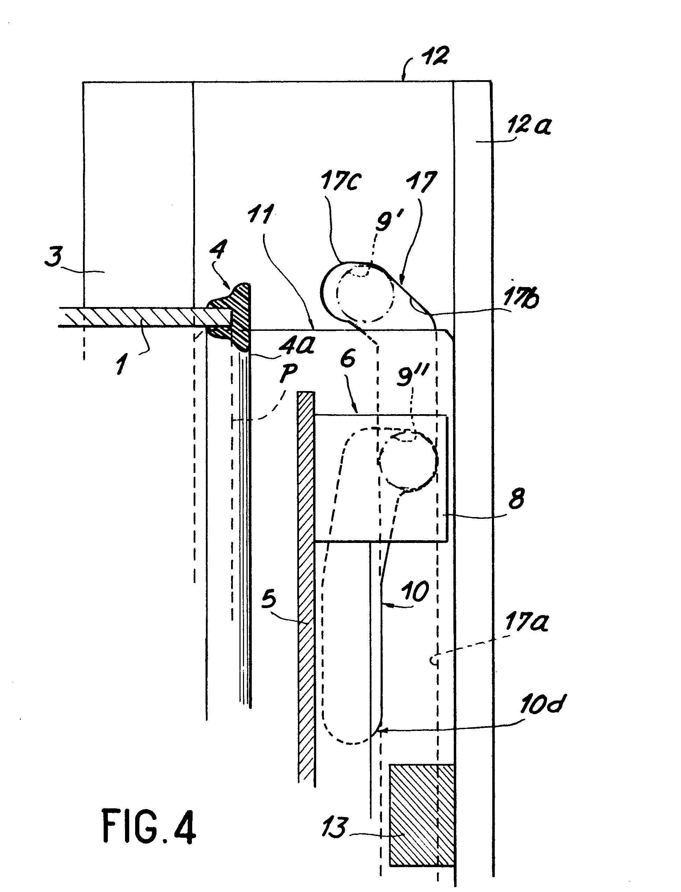

A la fin du déplacement a des glissières 11, les traverses 13 qui se trouvent alors en 13' échappent complètement aux blocs d'appui 8. Ces derniers, en effet, n'ont pas bougé car les galets 9 sont bloqués verticalement par les flancs des chemins de guidage 17c. Afin de faciliter le glissement mutuel des faces en regard des éléments 8 et 13, il est avantageux de prévoir à l'extrémité inférieure des chemins de guidage 10c (côté traverses 13) un léger creux 10d (accentué sur la Fig. 4 pour le rendre mieux visible). Lorsque les galets 9 arrivent au droit de ce creux 10 d, le joint 4, comprimé par le voile 5, repousse les galets au fond du creux dont la profondeur est déterminée de façon qu'en fond de creux les blocs d'appui 8 soient effectivement en contact avec les traverses 13 et que ce contact ne soit pas réalisé lorsque les galets ne sont pas engagés dans les creux 10d.

A la fin donc du déplacement a, l'ensemble de la porte 6 peut alors s'éloigner de l'orifice d'accès. Ceci s'opère au cours du déplacement b des glissières. A la fin des chemins 10c les galets 9 s'engagent dans les chemins 10b lesquels les contraignent à se déplacer dans les chemins 17c. Le voile 5 se déplace alors en translation orthogonalement au plan P.Cedé-placement du voile n'est pas très important mais suffisant pour décomprimer le joint et décoller le voile de ce dernier. Aucun cisaillement ou torsion du joint n'est à craindre.

A la fin du déplacement b, le galet 9 de la Fig. 1 se trouve dans la position représentée en tiretés 9' sur la Fig. 4, le galet étant alors à l'extrémité droite (en considérant la Fig. 4) du chemin 17c et à l'extrémité supé-rieure du chemin 10b.

La poursuite de la descente des glissières 11 fait déplacer les galets 9 le long des chemins 10 a et 17b, l'ensemble de la porte 6 se déplaçant alors en translation oblique mais toujours parallèlement au plan P. En fin de cette translation oblique, la porte 6 est à son éloignement maximal de l'orifice d'accès (voir Fig. 4). La descente des glissières 11 se poursuivant, les galets (9", Fig. 4) descendent le long des chemins verticaux 17a en étant retenus par le flanc inférieur des chemins 10a. La porte 6 peut ainsi libérer totalement l'accès à l'autoclave, les deux galets 9 inférieurs quittant les chemins 17a ouverts à leur extrémité inférieure (Fig. 2).

Au cours de l'ouverture de la porte, celle-ci reste constamment guidée latéralement par les pièces fixes 12 même lors de l'ouverture totale.

La remise en position de fermeture de la porte s'effectue par le manoeuvre inverse suivant une trajectoire rigoureusement inverse de la trajectoire d'ouverture grâce à la même conjugaison des chemins 10 et 17 contraignant les galets 9 à remonter les chemins 17a, 17b puis 17c.

Il est à noter qu'en tous points de cette trajectoire, la porte 6 peut être immobilisée en cessant d'exercer un couple moteur sur les pignons 15, les galets 9 étant constamment maintenus suspendus par l'un et/ou l'autre des deux chemins de guidage 10,17.

Au niveau de la sécurité, il est également important de noter qu'en cas d'ouverture intempestive de la por-porte 6, alors que l'intérieur de l'autoclave serait encore en surpression, l'opérateur ne risque ni de voir la porte être projetée vers lui puisqu'elle demeure constamment retenue par les retours 12a solidaires du bâti, ni de recevoir des projections de vapeur ou autre car au décollage du voile 5 du joint 4, le voile fait bouclier, les vapeurs fusant latéralement.

Bien entendu le dispositif de l'invention peut s'appliquer à un orifice d'accès d'autoclave ou d'une enceinte quelconque susceptible de subir des pressions internes importantes, d'une structure de celle représentée sur les dessins et avec un type de joint différent

De même, l'orifice d'accès peut n'être pas plan auquel cas le voile de porte présente une courbure appropriée.

D'une manière générale l'invention peut s'appliquer à une porte, sas ou analogue donnant accès à une enceinte ou zone susceptible d'être soumise à une pression notablement supérieure ou inférieure à celle régnant de l'autre côté de ladite porte ou analogue.

Enfin, l'invention n'est pas limitée au mode de réalisation représenté et décrit ci-dessus mais en couvre au contraire toutes les variantes notamment celles concernant la forme des chemins de guidage conjugués 10,17, ainsi que les moyens de commande du déplacement des plaques glissières 11.

Par ailleurs, la direction de coulissement des glissières 11 s'opère dans un plan quelconque vertical, horizontal ou oblique et, dans le plan considéré, suivant une orientation variable, en fonction de la forme et de la disposition de l'orifice à obturer et de la situation de ce dernier.

En outre, il est également possible de prévoir un dégagement latéral du voile de porte 5, c'est-à-dire une translation de celui-ci parallèlement au plan P de l'orifice d'accès, d'un côté et de l'autre de l'orifice. En effet, dans le mode de réalisation illustré par les dessins la porte 5 se translate vers le bas à l'ouverture, mais on pourrait déplacer la porte à l'ouverture également vers le haut. Il suffit pour cela dans la glissière 11 de prolonger le chemin de guidage 10 symétriquement de l'autre côté de la ligne III-III de la Fig.1 et, dans la pièce 12, de prolonger le chemin de guidage 17 symétriquement au délà de ladite ligne III-III. Le système à crémaillère 14 doit également être aménagé pour permettre le déplacement vers le haut de la glissière 11, par l'adjonction par exemple d'un pignon d'entraînement identique au galet 15 et disposé symétriquement à la partie supérieure du système de commande de la porte.

REVENDICATIONS
=============================

1. Dispositif de commande d'ouverture et de fermeture d'une porte susceptible d'être soumise de part et d'autre à des efforts pouvant être importants, du type dans lequel la porte se déplace en translation par rapport au plan de l'orifice de passage, ledit dispositif étant caractérisé en ce que la porte (6) est pourvue latéralement, sur deux côtés opposés parallèles d'organes de guidage (9) susceptibles de se déplacer librement chacun simultanément dans un premier chemin de guidage (10) constitué par une lumière de guidage ménagée dans deux glissières (11) planes parallèles et orthogonales au plan (P) dudit orifice de passage, lesdites glissières se déplaçant en translation dans leur plan parallèlement au plan dudit orifice, à l'aide de moyens de commande appropriés (14,15), et dans un second chemin de guidage (17) ménagé dans deux parois (12) solidaires du bâti sur lequel est montée la porte, tournées vers lesdites glissières et parallèles à celles-ci, lesdits premier et second chemins de guidage (10,17) ayant un tracé déterminé de manière à contraindre, lors du déplacement des glissières (11), les organes de guidage (9), c'est-à-dire le voile de porte (5), à contacter ou quitter le bord dudit orifice suivant une trajectoire orthogonale au plan de l'orifice et, lorsque le voile (5) est à distance dudit bord, à se déplacer en translation parallèlement à ce bord.

2. Dispositif suivant la revendication 1, caractérisé en ce que ledit premier chemin de guidage (10) comporte une première partie (10a) rectiligne orthogonale au plan de l'orifice de passage (P) et une seconde partie (10b) rectiligne légèrement inclinée par rapport à l'axe longitudinal de la glissière (11) et destinée à assurer la compression par le voile de porte (5) d'un joint d'étanchéité (4) interposé entre le voile et le bord de l'orifice (2) cependant que le second chemin de guidage (17) comporte une première partie (17a) rectiligne parallèle au plan de l'orifice, commune aux seconds chemins de guidage d'un même côté et alignée avec l'extrémité de la première partie (10a) des premiers chemins de guidage, une seconde partie (17c) rectiligne orthogonale au plan dudit orifice et dont l'extrémité est alignée
avec l'extrémité de ladite seconde partie (10b) des premiers
chemins de guidage et une partie rectiligne intermédiaire inclinée (17b) facilitant la transition entre les deux types
de mouvement de translation de la porte (6).

3. Dispositif suivant la revendication 2, caractérisé en ce que les glissières (11) coulissent dans des
pièces (12) solidaires du bâti (3) et sont reliées par plusieurs traverses (13) susceptibles de venir en contact avec
des pièces d'appui (8) solidaires de la porte (6) une fois
le voile de porte en contact avec le bord de l'orifice de
passage, les premiers chemins de guidage (10) comportant, à
cet effet, une partie rectiligne (10c) parallèle au plan (P)
dudit orifice et prolongeant la seconde partie (10b) de ces
premiers chemins de guidage.

4. Dispositif suivant la revendication 3, caractérisée en ce que la face de ladite partie rectiligne (10c)
prolongeant les premiers chemins de guidage, recevant la poussée de réaction de la porte, présente à son extrémité un
léger creux (10d) de façon que ladite poussée soit reportée
sur le bâti (3) par l'intermédiaire desdites pièces d'appui
(8) et traverses (13).

5. Dispositif suivant l'une des revendications
1 à 4 caractérisé en ce que le coulissement des glissières (11)
dans leurs guides est assuré par exemple par des crémaillères
(14) solidaires des glissières (11) et en prise avec des pignons (15) entraînés par un système manuel ou motorisé disposé latéralement à la porte.

6. Dispositif suivant l'une des revendications
1 à 5 caractérisé en ce que ledit joint d'étanchéité (4) est
de préférence constitué par un joint de type connu enfilé
à cheval sur la tranche de la paroi (1) de l'enceinte définissant l'orifice de passage,en sorte que le voile de porte (5)
est nu.

7. Dispositif suivant l'une des revendications
1 à 6 caractérisé en ce que lesdits organes de guidage (9)
sont constitués par des galets montés sur des roulements à
billes ou analogue.

- 3 -          0068060

8. Dispositif suivant l'une des revendications 1 à 7, caractérisé en ce que le voile de porte (5) est incurvé en correspondance avec le plan délimité par l'orifice de passage.

9. Dispositif suivant l'une des revendications 2 à 8 caractérisé en ce que lesdits premiers chemins de guidage (10) sont symétriques par rapport à leur première partie (10a) et en ce que lesdits seconds chemins de guidage (17) sont symétriques par rapport à leur seconde partie (17c) afin de permettre à la porte de se translater latéralement d'un côté ou de l'autre à volonté.

FIG.1

0068060

FIG.2

# FIG. 3

FIG.4

# 0068060

Numéro de la demande

**Office européen des brevets**

## RAPPORT DE RECHERCHE EUROPEENNE

EP 81 45 0008

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | FR - A - 1 584 576 (COMMISSARIAT)<br><br>* page 2, ligne 3 à page 3, ligne 20; figures 1-3 *<br>--- | 1,2 | B 01 J 3/03<br>F 16 J 13/22<br>E 05 D 15/10 |
| A | DE - C - 1 217 241 (A.G. WESER)<br><br>* colonne 3, ligne 1 à ligne 46; figures 1-3 *<br>--- | 1 | |
| A | FR - E - 79 051 (MAC GREGOR)<br><br>* page 2, colonne de droite, paragraphes 5-7; figures 2-4 *<br>--- | 1 | **DOMAINES TECHNIQUES RECHERCHES (Int. Cl. 3)** |
| A | FR - A - 398 471 (MAZZOLINI)<br><br>* page 1, ligne 39 à page 2, ligne 73; figures 1-5 * | 1,3 | B 01 J<br>E 05 D<br>F 16 J<br>B 63 B<br>E 06 B |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19.02.1982 | LEGER |

OEB Form 1503.1   06.78